# EUROPEAN PATENT APPLICATION

(11) **EP 1 930 745 A2**
(43) Date of publication of application: **11.06.2008**
(21) Application number: 07019892.4
(22) Date of filing: 11.10.2007
(51) Int. Cl.: G02B 3/00, G02F 1/13357

(54) **Lens and backlight unit, liquid crystal display having the same and method thereof**

(30) Priority: 12.10.2006 KR 20060099514
(71) Applicant: Samsung Electronics Co., Ltd., Yeongtong-gu Suwon-city, Gyeonggi-do 442-742 (KR)
(72) Inventor: Hwang, Seong Yong, Seongnam-Si Gyeonggi-Do, 463-738 (KR); Yoon, Ju Young, Yangcheon-Gu Seoul, 158-752 (KR); Kim, Gi Cherl, Yongin-Si Gyeonggi-Do, 446-557 (KR); Kim, Jin Soo, Songpa-Gu Seoul, 138-240 (KR); Kang, Eun Jeong, Chungcheongnam-Do, 330-160 (KR)
(74) Representative: Weitzel, Wolfgang

(57) **Abstract**

A lens for a liquid crystal display, and a backlight unit and a liquid crystal display having the same. The lens for a liquid crystal display includes a flat portion, a curved portion connected with the flat portion, facing the flat portion and including a first curved surface having a first curvature, and a groove disposed in the flat portion and including a second curved surface having a second curvature. The lens and the groove are formed to extend longitudinally in a first direction.

## Description

### BACKGROUND OF THE INVENTION

### 1. Field of Invention

The present invention relates to a lens for a liquid crystal display, and a backlight unit and a liquid crystal display having the same, and more particularly, to a lens for a liquid crystal display, which has a structure easy to package a plurality of light emitting diodes, and a backlight unit and a liquid crystal display having the same.

### 2. Description of the Related Art

As a light source of a backlight for a liquid crystal display ("LCD"), a light bulb, a light emitting diode ("LED"), a fluorescent lamp, a metal halide lamp or the like is generally used. An LED has been widely used as a light source of a backlight for a middle or small LCD, due to long life span, non-necessity of an additional inverter, uniform emission, light weight, thin configuration, and low electric power consumption.

In order to make the distribution of emitted light wide and uniform, a lens is generally employed in an LED. The LED is a point light source among such light sources for a backlight. An upper portion of each LED includes a lens, so that the lens serves to relatively widely diffuse the light emitted from the LED in a direction forward in the LCD. If the LED is relatively small, it is difficult to package the LED with the lens. Thus, as a number of LEDs used in an LCD increases, the cost of lenses and the cost for packaging the LEDs with the lenses are accordingly increased. Consequently, the manufacturing cost of a backlight and an LCD is also increased.

### BRIEF SUMMARY OF THE INVENTION

An exemplary embodiment provides a lens for a liquid crystal display, the lens having a structure of relatively easily disposing a plurality of light sources therein, and a backlight unit and a liquid crystal display having the same.

An exemplary embodiment provides a lens for a liquid crystal display capable of increasing a range of light distribution of a light source and providing uniform illuminance, and a backlight unit and a liquid crystal display having the same.

In an exemplary embodiment, there is provided a lens for a liquid crystal display, the lens including a flat portion, a curved portion extended from the flat portion, facing the flat portion and including a first curved surface having a first curvature, and a groove disposed in the flat portion and including a second curved surface having a second curvature. The lens and the groove are formed to extend longitudinally in a first direction.

In an exemplary embodiment, the second curvature may be larger than the first curvature.

In an exemplary embodiment, the lens for a liquid crystal display may be formed in a tunnel shape.

In an exemplary embodiment, the groove may be formed to have an elliptic cross section in a direction taken perpendicular to the extending direction of the groove.

In an exemplary embodiment, there is provided a backlight unit, including a light source unit. The light source unit includes a lens having a flat portion, a curved portion extended from the flat portion, facing the flat portion and including a first curved surface having a first curvature, and a groove disposed in the flat portion and including a second curved surface having a second curvature, and a light source arranged in the groove of the lens. The lens and the groove are formed to extend longitudinally in a first direction.

In an exemplary embodiment, the second curvature may be larger than the first curvature.

In an exemplary embodiment, the lens may be formed in a tunnel shape,

In an exemplary embodiment, the groove may be formed to have an elliptic cross section taken perpendicular to the first direction.

In an exemplary embodiment, the light source may include a light emitting diode.

In an exemplary embodiment, the light source may include a lamp.

In an exemplary embodiment, a plurality of the light source units may be arranged in an mx n matrix form (where, m and n are integers) and spaced apart from each other by a predetermined interval.

In an exemplary embodiment, the backlight unit may further include a diffusing plate disposed over the light source unit, and a plurality of optical sheets disposed over the diffusing plate.

In an exemplary embodiment, there is provided a liquid crystal display including a liquid crystal display panel displaying images, a backlight unit providing light to the liquid crystal display panel and a receiving member receiving the backlight unit. The backlight unit includes a light source unit including a lens having a flat portion, a curved portion connected with the flat portion, facing the flat portion and including a first curved surface having a first curvature, and a groove disposed in the flat portion and including a second curved surface having a second curvature and a light source arranged in the groove of the lens. The lens and the groove are formed extending in a first direction.

In an exemplary embodiment, the second curvature may be greater than the first curvature.

In an exemplary embodiment, a plurality of the light source units may be arranged in the receiving member in an mx n matrix form (where, m and n are integers) and spaced apart from each other by a predetermined interval.

In an exemplary embodiment, the light source may include a light emitting diode.

In an exemplary embodiment, the light source may include a lamp.

In an exemplary embodiment of a method of forming a backlight assembly in a liquid crystal display, the method includes forming a plurality of lenses and disposing a light source in a groove of each of the plurality of lenses. Each of the lenses includes a flat portion, a curved portion connected to the flat portion, facing the flat portion and including a first curved surface having a first curvature, and the groove disposed in the flat portion and including a second curved surface having a second curvature. The lens covers an entire of the light source. The lens and the groove extend longitudinally in a first direction.

In an exemplary embodiment of the method, the light source includes a plurality of light emitting diodes arranged along the first direction of the groove.

In an exemplary embodiment of the method, the disposing a light source includes disposing groups of light emitting diodes, the groups being spaced at a first distance from each other along the groove of the lens.

In an exemplary embodiment, the method may further include disposing the plurality of lenses at a second distance from each other in a second direction, the second direction being perpendicular to the first direction.

In an exemplary embodiment of the method, the disposing groups of light emitting diodes includes adjusting the first distance and the disposing the plurality of lenses includes adjusting the second distance, the adjusting the distances increasing a distribution of light emitting through the lenses from the light sources.

### BRIEF DESCRIPTION OF THE DRAWINGS

The above and other objects, features and advantages of the present invention will become apparent from the following description of exemplary embodiments given in conjunction with the accompanying drawings, in which:
FIG. 1 is a bottom perspective view showing an exemplary embodiment of a light source unit with a lens according to the present invention;
FIG. 2 is a cross-sectional view of the light source unit shown in FIG 1;
FIG 3 illustrates an exemplary embodiment of a path of light from a light source unit with a lens according to the present invention;
FIGS. 4A and 4B are a bottom exploded perspective view and a plane view, respectively, showing another exemplary embodiment of the light source unit with the lens according to the present invention;
FIGS. 5A and 5B are graphs showing an exemplary embodiment of illuminance distribution of light source units with and without a lens, respectively, according to the present invention;
FIGS. 6A and 6B are graphs showing an exemplary embodiment of illuminance of light source units with and without a lens according to the present invention;
FIGS. 7A and 7B are bottom surface view and a perspective view, respectively, showing an array of light source units with lenses according to the present invention;
FIG 8 is a graph showing an exemplary embodiment of illuminance uniformity of a light source unit with a lens according to the present invention;
FIG 9 is an exploded perspective view showing an exemplary embodiment of a liquid crystal display including a light source unit with a lens according to the present invention; and
FIG 10 is an exploded perspective view showing another exemplary embodiment of the liquid crystal display including a light source unit with a lens according to the present invention.

### DETAILED DESCRIPTION OF THE INVENTION

The invention is described more fully hereinafter with reference to the accompanying drawings, in which exemplary embodiments of the invention are shown. This invention may, however, be embodied in many different forms and should not be construed as limited to the exemplary embodiments set forth herein. Rather, these embodiments are provided so that this disclosure will be thorough and complete, and will fully convey the scope of the invention to those skilled in the art, In the drawings, the size and relative sizes of layers and regions may be exaggerated for clarity.

It will be understood that when an element or layer is referred to as being "on", "connected to" or "coupled to" another element or layer, the element or layer can be directly on, connected or coupled to another element or layer or intervening elements or layers. In contrast, when an element is referred to as being "directly on," "directly connected to" or "directly coupled to" another element or layer, there are no intervening elements or layers present. Like numbers refer to like elements throughout. As used herein, the term "and/or" includes any and all combinations of one or more of the associated listed items.

It will be understood that, although the terms first, second, third, etc., may be used herein to describe various elements, components, regions, layers and/or sections, these elements, components, regions, layers and/or sections should not be limited by these terms. These terms are only used to distinguish one element, component, region, layer or section from another region, layer or section. Thus, a first element, component, region, layer or section discussed below could be termed a second element, component, region, layer or section without departing from the teachings of the present invention.

Spatially relative terms, such as "under," "above", "upper" and the like, may be used herein for ease of description to describe the relationship of one element or feature to another element(s) or feature(s) as illustrated in the figures. It will be understood that the spatially relative terms are intended to encompass different orientations of the device in use or operation, in addition to the orientation depicted in the figures. For example, if the device in the figures is turned over, elements described as "under" relative to other elements or features would then be oriented "above" relative to the other elements or features. Thus, the exemplary term "under" can encompass both an orientation of above and below. The device may be otherwise oriented (rotated 90 degrees or at other orientations) and the spatially relative descriptors used herein interpreted accordingly.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

Embodiments of the invention are described herein with reference to cross-section illustrations that are schematic illustrations of idealized embodiments (and intermediate structures) of the invention. As such, variations from the shapes of the illustrations as a result, for example, of manufacturing techniques and/or tolerances, are to be expected. Thus, embodiments of the invention should not be construed as limited to the particular shapes of regions illustrated herein but are to include deviations in shapes that result, for example, from manufacturing.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

All methods described herein can be performed in a suitable order unless otherwise indicated herein or otherwise clearly contradicted by context. The use of any and all examples, or exemplary language (e.g., "such as"), is intended merely to better illustrate the invention and does not pose a limitation on the scope of the invention unless otherwise claimed. No language in the specification should be construed as indicating any non-claimed element as essential to the practice of the invention as used herein.

Hereinafter, the present invention will be described in detail with reference to the accompanying drawings.

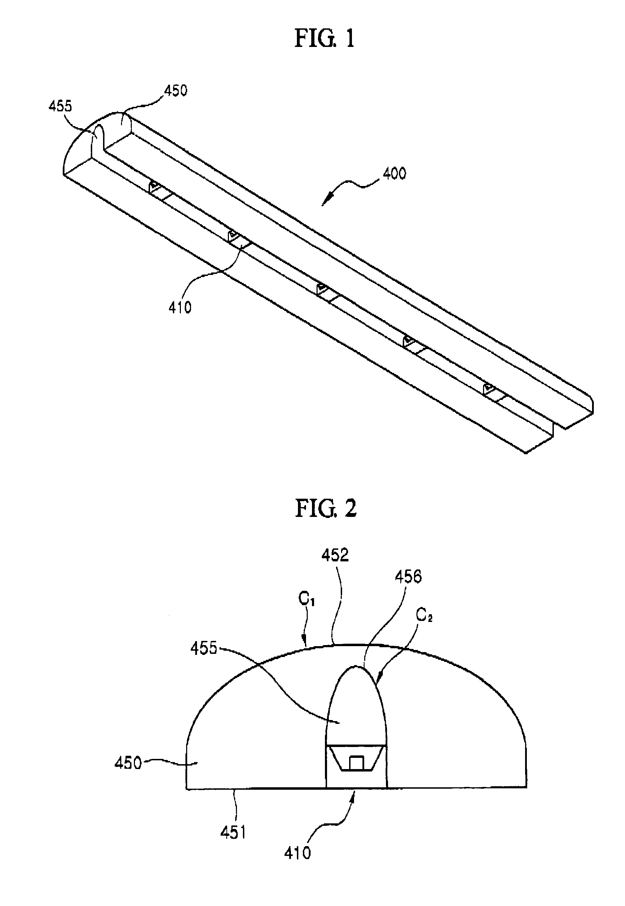

FIG. 1 is a bottom perspective view showing an exemplary embodiment of a light source unit with a lens according to the present invention, and FIG. 2 is a cross-sectional view of the light source unit shown in FIG. 1.

Referring to FIGS. 1 and 2, a light source unit 400 includes light emitting diodes ("LEDs") 410 and a lens 450.

The light source unit 400 includes a plurality of the light emitting diodes 410. The light emitting diodes 410 are arranged substantially linearly and spaced apart from each other by predetermined intervals in a longitudinal direction of the lens 450.

The lens 450 is formed substantially in a bar shape extending in the longitudinal direction in which the LEDs 410 are arranged such that the lens 450 entirely covers the plurality of LEDs 410. A groove 455 is formed on the bottom surface of the lens. The groove 455 extends from the bottom surface of the lens 450 and into the lens 450.

The plurality of LEDs 410 are arranged within the groove 455 of the lens 450 and are spaced apart from each other by the predetermined intervals. The lens 450 disposed over the plurality of LEDs 410 serves to change path of the light emitted from the LEDs 410. The lens 450 refracts the light originally upwardly emitted from the LEDs 410 in a lateral direction, thereby serving to diffuse the light emitted from the LEDs 410.

Each of the LEDs 410 may be considered a semiconductor "P-N junction diode." When joining P-type and N-type semiconductors with each other and then applying voltage to the joined P-type and N-type semiconductors, holes of the P-type semiconductor move toward the N-type semiconductor and gather in a middle layer. In contrast, electrons of the N-type semiconductor move toward the P-type semiconductor and gather in a middle layer that is a lowermost level of a conduction band. These electrons are dropped into holes of a valence band and emit energy as much as a level difference between the conduction band and the valance band, e.g. an energy gap, whereby the energy is emitted in the form of light.

The LED 410 may emit light with various wave lengths. Indium content in an InGaN layer used as an activation layer in III-V nitride based LEDs may be controlled, a plurality of LEDs which emit light with wave lengths different from each other may be combined, or an LED emitting light having a predetermined wave length band such as a ultra violet ray may be used together with phosphor. In an exemplary embodiment and for assembling convenience, as the LED 410, a surface mount device ("SMD") type LED may be used, such as being directly mounted on a printed circuit board.

Referring to FIG 2, the lens 450 includes a body including a flat bottom or base portion 451 formed substantially in a plane surface, a curved portion 452 connected with the flat portion 451 to face the flat portion 451, and a groove 455 formed in the flat portion 451. The curved portion 452 is formed as a substantially curved surface having a first curvature C₁. The groove 455 formed in the flat portion 451 includes a curved surface having a second curvature C₂. The lens 450 is formed in a substantially bar shape to extend in a first (e.g., longitudinal) direction. The groove 455 formed in the flat portion 451 and extends in a direction in which the lens 450 is formed, such as in a direction perpendicular to the flat portion 451, The curved surface in the groove 455 at a distal end 456 of the groove 455 is formed such that the second curvature C₂ thereof is larger than the first curvature C₁ of the curved portion 452.

The lens 450 is formed substantially in a bar shape having a first surface (e.g., the flat portion 451) which is flat and a second surface (e.g., the curved portion 452) which is curved. The groove 455 formed in the flat portion 451 of the lens, e.g., the bottom surface of the lens 450, is formed to have a substantially elliptical cross section taken perpendicular to the extending direction (e.g., longitudinal direction) of the groove 455. The lens 450 may be considered to be formed in a tunnel shape.

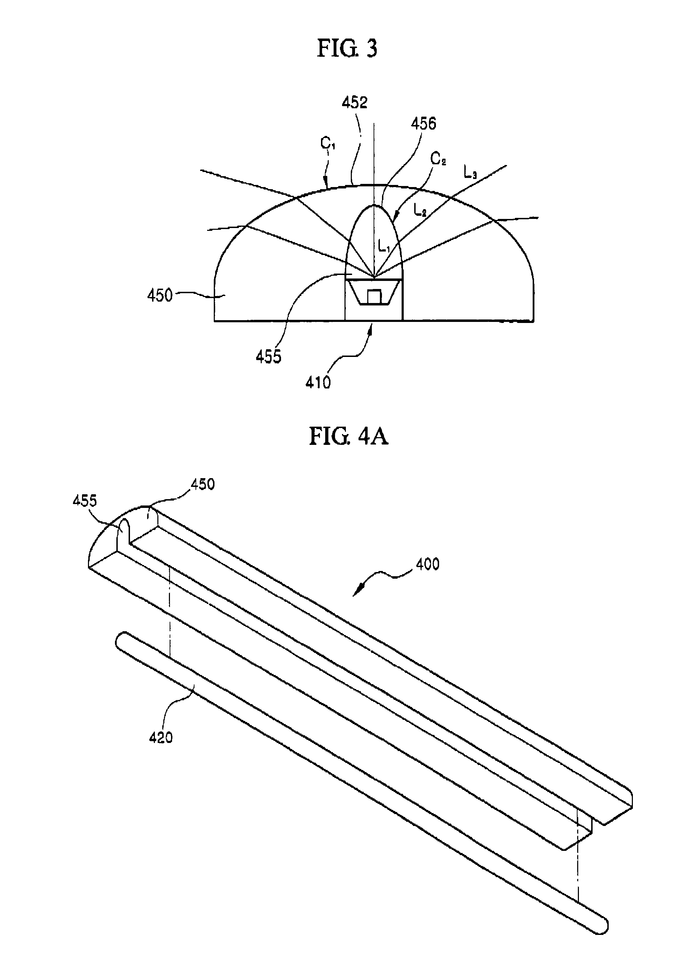

FIG. 3 illustrates an exemplary embodiment of a path of the light from a light source unit with a lens according to the present invention.

Referring to FIG. 3, the light source unit includes the plurality of LEDs 410 and the lens 450 capable of entirely covering the plurality of LEDs 410. The lens 450 includes the flat portion 451, the curved portion 452 connected with the flat portion 451 to face the flat portion 451 and formed in a substantially curved surface having a first curvature C₁, and a groove 455 formed in the flat portion 451 and including a curved surface having a second curvature C₂.

The path of the light emitted from the LED 410 disposed in the groove 455 of the lens 450 will be described with reference to FIG. 3. Most of light L₁ emitted from the LED 410 proceeds upwardly, e.g., towards the curved portion 452. The light L₁ is changed into a first refracted light L₂ that is refracted substantially laterally when the light L₁ enters the curved surface of the groove 455 having the second curvature C₂. When the first refracted light L₂ enters the curved surface 452 having the first curvature C₁ after proceeding into the lens 450 from the groove 455, the first refracted light L₂ is changed into a second refracted light L₃ that is refracted once again substantially laterally. the second refracted light L₃ finally exits out of the lens 450 through the curved portion 452. The original light emitted from the LED 410 is laterally refracted through the lens 450 and radiates therefrom. Advantageously, the light is not concentrated on an upper portion of the LED 410, thereby resulting in a relatively wide distribution of the light emitted from the LED 410.

In exemplary embodiments, a concave lens may cause incident light parallel to the axis of the concave lens to be refracted and proceed as if the light exits from the focus of the lens. Such a principle is applied to the light source unit according to the present invention. Therefore, the lateral refraction of the light emitted from the LED 410 can be controlled by adjusting the first curvature C₁ of the curved portion 452 and the second curvature C₂ of the groove 455 of the lens 450.

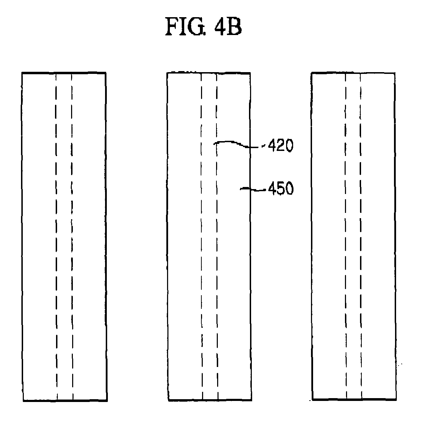

FIGS. 4A and 4B are a bottom exploded perspective view and a plane view, respectively, showing another exemplary embodiment of a light source unit with a lens according to the present invention.

Referring to FIGS. 4A and 4B, a lens 450 of a light source unit 400 has essentially the same configuration as the embodiment of FIGS. 1-3 described above except that a lamp instead of an LED is used as a light source, Hereinafter, the following description will be focused on such differences,

The light source unit 400 includes a lamp 420 as a light source. The lens 450 is arranged over and covers the lamp 420 to change the path of the light. The lamp 420 light source may extend an entire of the longitudinal direction of the lens 450, or may extend a portion thereof as is suitable for the purpose described herein.

In exemplary embodiments, a line light source such as a cold cathode fluorescent lamp ("CCFL") or an external electrode fluorescent lamp ("EEFL") may be used as the lamp 420, but the present invention is not limited thereto. The cold cathode fluorescent lamp ("CCFL"), which is turned on at a relatively low temperature without heating a filament, includes electrodes provided on both side ends of a glass tube, a certain amount of mercury and mixture gas of argon, neon and the like within the glass tube, and phosphor applied to the inner surface of the glass tube. Electron emission is generated by a relatively high voltage electric field applied to both the electrodes of the lamp. During the electron emission, mercury is excited to emit ultraviolet rays. The emitted ultraviolet rays collide with the phosphor in the inner surface of the lamp to emit visible rays.

The external electrode fluorescent lamp ("EEFL") is a kind of a plasma fluorescent lamp, in which the electric field applied to the electrodes induces plasma discharge in the lamp to emit light, which does not generate heat in the glass itself, thereby having lower heat radiation and a relatively long life span.

As illustrated in FIGS. 4A and 4B, the lens 450 is formed in a general tunnel shape. If the lamp 420 such as a cold cathode fluorescent lamp or an external electrode fluorescent lamp is arranged within the groove 455 of the lens 450, the light emitted from the lamp 420 is refracted laterally from the lamp 420 and through the lens 450 to exit to an outside of the lens 450, such as proceeding into or through a liquid crystal display device, Advantageously, the light is not concentrated on an upper portion of the lens, which results in a relatively wide distribution of the emitted light.

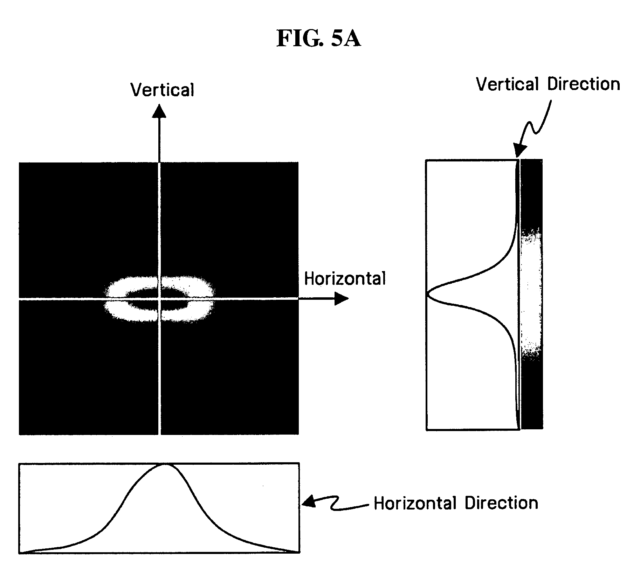

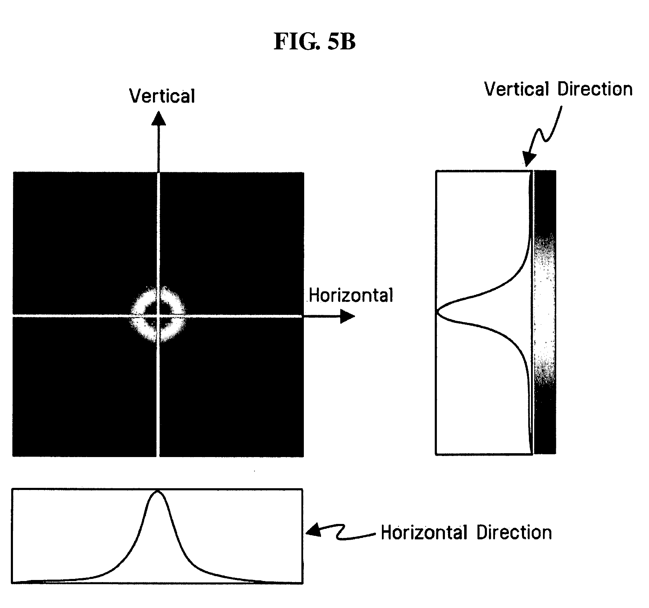

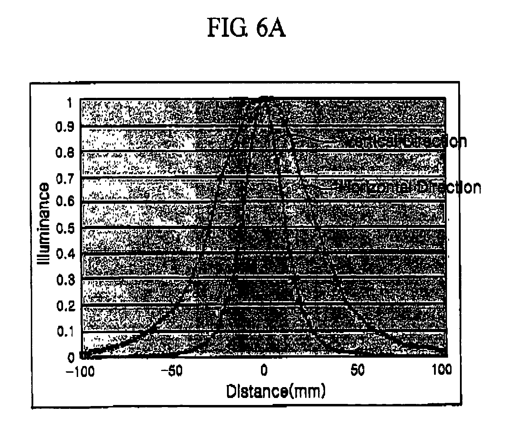

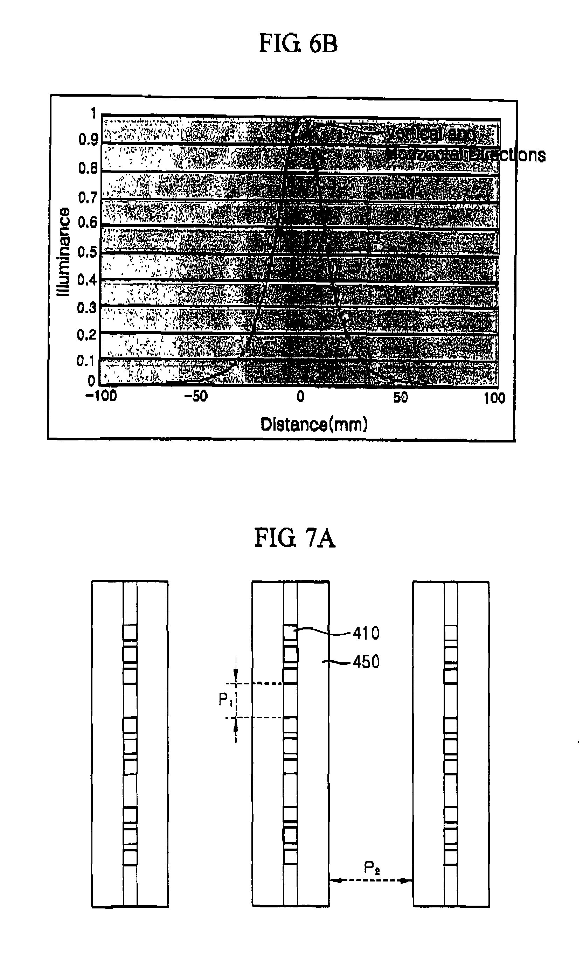

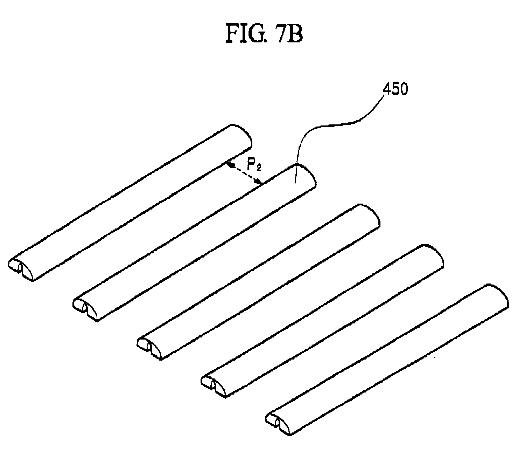

FIGS. 5A and 5B are graphs showing illuminance distribution of light source units with and without lenses, respectively, according to the present invention, and FIGS. 6A and 6B are graphs showing illuminance of the light source units with and without the lenses, respectively, according to the present invention.

FIGS. 5A and 6A show measurement results of illuminance of light incident on a plate arranged above the light source unit with the lens disposed over the LEDs. The plate is spaced apart from the light source unit by about 40 millimeters (mm). In contrast, FIGS. 5B and 6B show measurement results of illuminance of light incidence on a plate arranged above the light source unit and including the LEDs without a lens.

Referring to FIGS. 5A and 6A, it is noted that a range of light distribution in the horizontal direction (e.g., a "width" direction of the lens taken parallel to the bottom surface 451 of the lens) is larger than a range of light distribution in the vertical direction (e.g., a direction taken perpendicular to the bottom surface 451 of the lens). The range of light distribution is larger in the horizontal direction because the light emitted from the LEDs is refracted laterally, e.g., the horizontal direction, and through the lens to exit to the outside of the lens, such that the range of light distribution in the horizontal direction becomes larger than that in the vertical direction,

On the other hand, as shown in FIGS. 5B and 6B, where the light source unit without a lens, a range of light distribution in the horizontal direction is equal to that in the vertical direction. The range of light distribution (e.g., in the vertical and horizontal directions) is considerably smaller as compared to the range of light distribution (in the horizontal direction) of the light source unit with the lens as illustrated in FIGS. 5A and 6A.

FIGS. 7A and 7B are a bottom surface view and a perspective view, respectively, showing an array of light source units with lenses according to the present invention,

Referring to FIG. 7A, a plurality of LEDs 410 are arranged in a 3x 9 matrix form and three lenses 450 are arranged over the plurality of LEDs 410 considering the array of the light source units. The lenses 450 are spaced apart from each other by predetermined distances P₂. Nine LEDs 410 are arranged in the groove of each lens 450 and are spaced apart from each other by predetermined intervals along the longitudinal direction of the lens 450. In an exemplary embodiment, the LEDs 410 include red, green and yellow LEDs for respectively emitting red, green and yellow light. The red, green and yellow LEDs are alternated along the longitudinal direction of the groove of the lens 450, The number of LEDs in the groove of the lens 450, the colors of the light emitted from the LEDs and the arrangement of the LEDs in the groove of the lens 450 are not limited those shown in FIG 7A.

Referring to FIG. 7A, a red, green and yellow LED consecutively arranged may be considered a group of the LEDs. Groups of the LEDs are arranged to be spaced apart from each along the longitudinal direction of the groove of the lens 450 other by predetermined distances P₁. The wave lengths of the lights emitted from the LEDs are not limited thereto. Alternatively, a white LED capable of emitting white light may be used in a group of LEDs containing other colored LEDs, or as a group of LEDs including only white LEDs. The spaced distance P₁ between the groups of the LEDs and the spaced distance P₂ between the lenses 450 can be controlled on the basis of the range of the light distribution of the light emitted through the lens.

FIG. 7B shows an array of the light source units with five lenses 450 arranged to be spaced apart from each other by predetermined intervals P₂. The interval between the lenses 450 may be substantially uniform or may be non-uniform as suitable for the purpose described herein. In exemplary embodiments, the LEDs are arranged in a jx k matrix form taken over the array of light source units, such as where j and/or k equals 5. In the illustrated exemplary embodiment, the light source units are arranged in a 5x 1 (or alternatively, a 1x 5) matrix form, the present invention is not limited thereto. The light source units may be also arranged in an mx n matrix form. That is, the lenses may be arranged in an mx n matrix form.

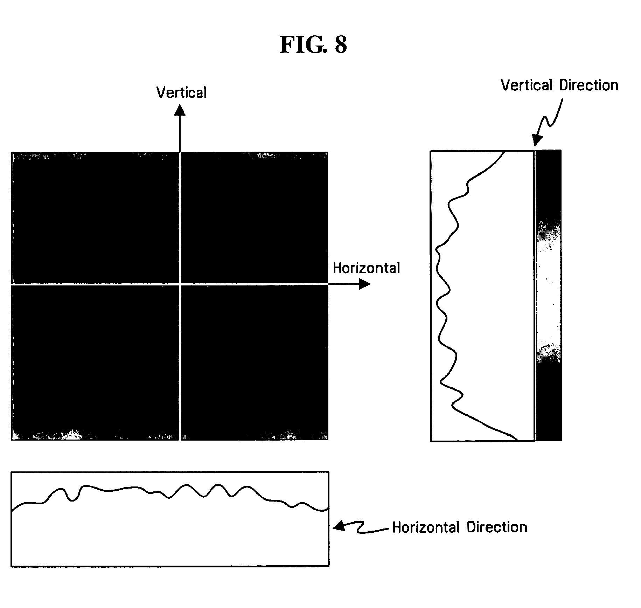

FIG. 8 is a graph showing an exemplary embodiment of illuminance uniformity of a light source unit with a lens according to the present invention.

FIG 8 shows the illuminance uniformity of the light which is measured from a plate spaced apart by a predetermined distance from an upper portion of a light source unit. The spaced distance between the light source unit and the plate is about 12mm. The LEDs are arranged to be spaced apart from each other within the lens by about 10mm and the lenses are arranged to be spaced apart from each other by about 22.5mm, The number of the LEDs used in the illustrated embodiment is 21, and the number of the used lenses is 3. The LEDs are arranged in a 3x 7 matrix form. As shown in FIG, 8, it is noted that the illuminance distribution in the horizontal and vertical directions is substantially uniform.

In comparison to the illustrated embodiment using 21 LEDs, in order for a light source unit without a lens to obtain essentially the same uniform illuminance distribution as the light source unit shown in FIG 8, at least 34 LEDs are required.

Advantageously, when the light source unit with the lens includes a relatively small number of the LEDs, it is possible to obtain a desired illuminance distribution, thereby making it possible to reduce the manufacturing cost of the light source unit and to manufacture a relatively slim light source unit.

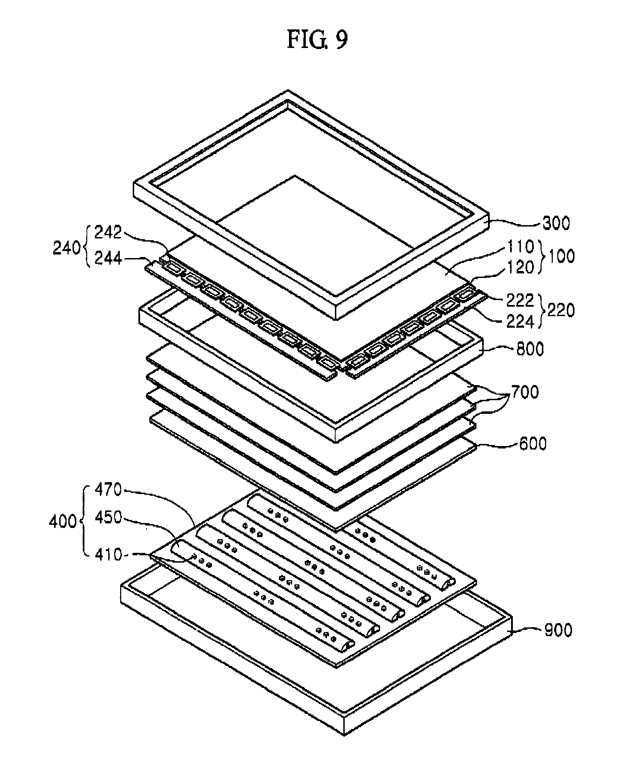

FIG. 9 is an exploded perspective view showing an exemplary embodiment of a liquid crystal display including a light source unit with a lens according to the present invention.

Referring to FIG 9, the liquid crystal display includes a top chassis 300, a liquid crystal display panel 100, driving circuit units 220 and 240, a diffusing plate 600, a plurality of optical sheets 700, a light source unit 400, a mold frame 800 and a bottom chassis 900.

A predetermined receiving space is provided in the mold frame 800. A backlight unit including the diffusing plate 600, the plurality of optical sheets 700 and the light source unit 400, is disposed in the receiving space of the mold frame. The liquid crystal panel 100 for displaying images is disposed over the backlight unit.

The driving circuit units 220 and 240 are electrically connected to the liquid crystal display panel 100. The driving circuit units include a gate side printed circuit board 224 having a control integrated circuit ("IC") mounted thereon to supply predetermined gate signals to gate lines of a thin film transistor ("TFT") substrate 120, a data side printed circuit board 244 having a control IC mounted thereon to supply predetermined data signals to data lines of the TFT substrate 120, a gate side flexible printed circuit board 222 for electrically connecting the TFT substrate 120 to the gate side printed circuit board 224, and a data side flexible printed circuit board 242 for electrically connecting the TFT substrate 120 to the data side printed circuit board 244. The gate and data side printed circuit boards 224 and 244 are respectively connected to the gate and data side flexible printed circuit boards 222 and 242 in order to supply gate driving signals and external image signals. In an exemplary embodiment, the gate and data side printed circuit boards 224 and 244 may be integrated on a single printed circuit board. The flexible printed circuit boards 222 and 242 have the driving circuit ICs (not shown) mounted thereon to supply RGB (Red, Green and Blue) signals generated in the printed circuit boards 224 and 244, power, and the like to the liquid crystal display panel 100.

As illustrated in FIG. 9, the light source unit 400 includes a printed circuit board 470, LEDs 410 arranged in a jx k matrix form on the printed circuit board 470, and lenses 450 arranged in an mx n matrix form over the LEDs 410, where j=9, k=5, m=1 and n=5. In alternative embodiments, the j, k, m and n may be variously changed, Since the light emitted from the LEDs 410 is refracted laterally through the lenses 450 to exit to the outside of the lenses 450, the light is not concentrated on the upper portion of the LEDs 410, Advantageously, there is an advantage in that the light distribution of the light emitted from the LEDs becomes wider.

The diffusing plate 600 and the plurality of optical sheets 700 are disposed over the light source unit 400 to cause the illuminance distribution of the light emitted from the light source unit 400 to be substantially uniform. The top chassis 300 is coupled with the mold frame 800 to cover a peripheral portion of the liquid crystal display 100, e.g., a non-display region, and side surfaces and a part of bottom surface of the mold frame 800. The bottom chassis 900 is provided under the mold frame 800 to close the receiving space of the mold frame 800.

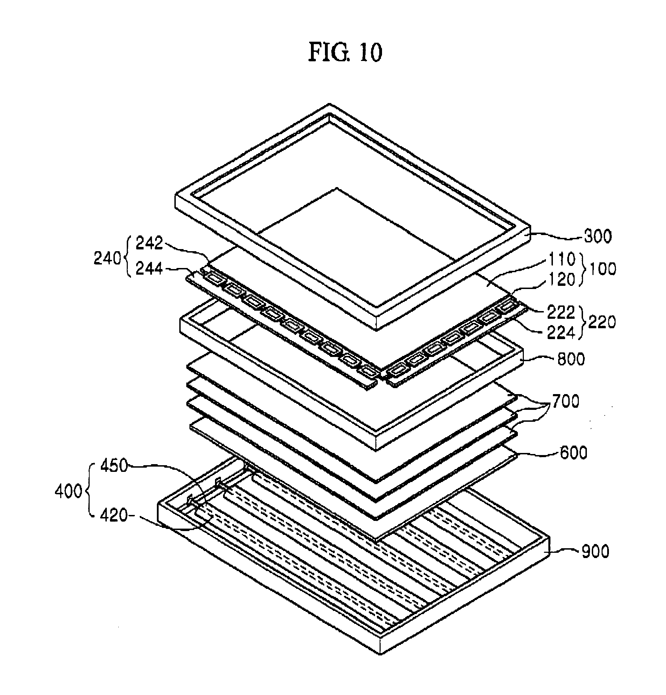

FIG. 10 is an exploded perspective view showing another exemplary embodiment of the liquid crystal display including a light source unit with a lens according to the present invention, The liquid crystal display shown in FIG. 10 is substantially similar to that shown in FIG. 9 except that lamps instead of the LEDs are used as light sources. Hereina fter, the following description will be focused on such differences.

Referring to FIG 10, the liquid crystal display includes a top chassis 300, a liquid crystal display panel 100, driving circuit units 220 and 240, a diffusing plate 600, a plurality of optical sheets 700, a light source unit 400, a mold frame 800 and a bottom chassis 900.

The light source unit 400 includes a plurality of lamps 420 and lenses 450 provided over the lamps 420 to change a path of the light emitting from the lamps 420. In exemplary embodiments a cold cathode fluorescent lamp or an external electrode fluorescent lamp may be used as the lamp 420. Although the lamp 420 may be formed in an "I" shape as shown in FIG 10, the present invention is not limited thereto, and the shape of the lamp 420 may be variously changed.

As illustrated in the exemplary embodiments, it is possible to reduce the time for packaging or assembling a light source unit and the cost thereof by forming a lens extending and covering a plurality of light sources.

In the illustrated embodiments, the lens is installed over the light source, thereby increasing the range of light distribution and obtaining the substantially uniform illuminance distribution. Advantageously a result, it is possible to increase the light efficiency of the light source unit and to reduce the overall number of light sources.

The foregoing descriptions are merely exemplary embodiments of a lens for a liquid crystal display and a backlight unit and a liquid crystal display having the same, so that the present invention is not limited to the aforementioned embodiments. Accordingly, it will be understood by those skilled in the art that various modifications and changes can be made thereto without departing from the spirit and scope of the invention defined by the appended claims.

## Claims

1. A lens for a liquid crystal display, the lens comprising:
a flat portion;
a curved portion extended from the flat portion, facing the flat portion and including a first curved surface having a first curvature; and
a groove disposed in the flat portion and including a second curved surface having a second curvature,
wherein the lens and the groove extend longitudinally in a first direction.

2. The lens as claimed in claim 1, wherein the second curvature is larger than the first curvature.

3. The lens as claimed in claim 2, wherein the lens has a tunnel shape.

4. The lens as claimed in claim 3, wherein the groove has an elliptic cross section in a direction taken perpendicular to the first direction.

5. A backlight unit comprising:
a light source unit including:
a lens including a flat portion, a curved portion extended from the flat portion, facing the flat portion and including a first curved surface having a first curvature, and a groove extended from the flat portion, extending towards the curved portion and including a second curved surface having a second curvature; and
a light source arranged in the groove of the lens,
wherein the lens and the groove extend longitudinally in a first direction.

6. The backlight unit as claimed in claim 5, wherein the second curvature is larger than the first curvature.

7. The backlight unit as claimed in claim 6, wherein the lens has a tunnel shape.

8. The backlight unit as claimed in claim 7, wherein the groove has an elliptic cross section in a direction taken perpendicular to the first direction.

9. The backlight unit as claimed in claim 6, wherein the light source comprises a light emitting diode.

10. The backlight unit as claimed in claim 6, wherein the light source comprises a lamp.

11. The backlight unit as claimed in claim 6, wherein a plurality of the light source units are arranged in an mx n matrix form (where, m and n are an integer) and spaced apart from each other by a predetermined interval.

12. The backlight unit as claimed in claim 5, further comprising a diffusing plate disposed over the light source unit, and a plurality of optical sheets disposed over the diffusing plate,

13. A liquid crystal display comprising:
a liquid crystal display panel displaying images;
a backlight unit providing light to the liquid crystal display panel; and
a receiving member receiving the backlight unit,
wherein the backlight unit comprises:
a light source unit including:
a lens including a flat portion, a curved portion connected with the flat portion, facing the flat portion and including a first curved surface having a first curvature, and a groove disposed in the flat portion and including a second curved surface having a second curvature; and
a light source arranged in the groove of the lens,
wherein the lens and the groove extend longitudinally in a first direction.

14. The liquid crystal display as claimed in claim 13, wherein the second curvature is larger than the first curvature.

15. The liquid crystal display as claimed in claim 14, wherein a plurality of the light source units are arranged in the receiving member in an mx n matrix form (where, m and n are an integer) and spaced apart from each other by a predetermined interval.

16. The liquid crystal display as claimed in claim 15, wherein the light source comprises a light emitting diode.

17. The liquid crystal display as claimed in claim 15, wherein the light source comprises a lamp.

18. A method of forming a backlight assembly in a liquid crystal display, the method comprising:
forming a plurality of lenses, each of the lenses including a flat portion, a curved portion connected to the flat portion, facing the flat portion and including a first curved surface having a first curvature, and a groove disposed in the flat portion and including a second curved surface having a second curvature; and
disposing a light source in the groove of each of the plurality of lenses;
wherein the lens covers an entire of the light source; and
wherein the lens and the groove extend longitudinally in a first direction.

19. The method as claimed in claim 18, wherein the light source comprises a plurality of light emitting diodes arranged along the first direction of the groove.

20. The method as claimed in claim 19, wherein the disposing a light source includes disposing groups of light emitting diodes, the groups being spaced at a first distance from each other along the groove of the lens.

21. The method as claimed in claim 20, further comprising disposing the plurality of lenses at a second distance from each other in a second direction, the second direction being perpendicular to the first direction.

22. The method as claimed in claim 21, wherein the disposing groups of light emitting diodes includes adjusting the first distance and the disposing the plurality of lenses includes adjusting the second distance, the adjusting the distances increasing a distribution of light emitting through the lenses from the light sources.
